(19) Europäisches Patentamt
European Patent Office
Office européen des brevets

(11) **EP 4 663 606 A1**

(12) **EUROPEAN PATENT APPLICATION**
published in accordance with Art. 153(4) EPC

(43) Date of publication:
**17.12.2025 Bulletin 2025/51**

(21) Application number: **24854499.1**

(22) Date of filing: **19.08.2024**

(51) International Patent Classification (IPC):
*C01G 53/00* (2025.01)    *H01M 4/36* (2006.01)
*H01M 4/525* (2010.01)    *H01M 4/505* (2010.01)
*H01M 4/02* (2006.01)

(52) Cooperative Patent Classification (CPC):
C01G 53/00; H01M 4/02; H01M 4/36; H01M 4/505;
H01M 4/525; Y02E 60/10

(86) International application number:
**PCT/KR2024/012274**

(87) International publication number:
**WO 2025/037948 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.08.2023 KR 20230107877**

(71) Applicant: **LG CHEM, LTD.**
**Seoul 07336 (KR)**

(72) Inventors:
• **KIM, Sun Tai**
**Daejeon 34122 (KR)**
• **JEON, Hye Ji**
**Daejeon 34122 (KR)**
• **NAM, Dae Hyeon**
**Daejeon 34122 (KR)**
• **LEE, Ju Ho**
**Daejeon 34122 (KR)**
• **SHIN, Ho Geun**
**Daejeon 34122 (KR)**
• **YOON, Jin Seul**
**Daejeon 34122 (KR)**
• **KIM, Young Jun**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING POSITIVE ELECTRODE ACTIVE MATERIAL**

(57) The present invention relates to a method for manufacturing a positive electrode active material and, more specifically, to a method for manufacturing a positive electrode active material, the method comprising the steps of: (A) preparing a lithium composite transition metal oxide by mixing a positive electrode active material precursor and a lithium (Li)-containing raw material and then firing the mixture; and (B) forming a coating layer on the lithium composite transition metal oxide by mixing the lithium composite transition metal oxide and a coating raw material and heat-treating same, wherein the heat treatment includes a temperature increasing section for increasing the temperature and a maintaining section for maintaining the temperature, and includes a section for injecting steam only in the temperature increasing section.

[FIG. 1]

EP 4 663 606 A1

**Description**

## TECHNICAL FIELD

### Cross-reference to Related Applications

This application claims priority from Korean Patent Application No. 10-2023-0107877, filed on August 17, 2023, the disclosure of which is incorporated by reference herein.

### Technical Field

The present invention relates to a preparation method of a positive electrode active material.

## BACKGROUND ART

Due to recent increase in technological development and demand for a mobile device and an electric vehicle, demand for a secondary battery as a source of energy is rapidly increasing. Among such secondary batteries, a lithium secondary battery having high energy density and voltage, long cycle lifetime, and low self-discharging rate has been commercialized and widely used.

As a positive electrode active material of the lithium secondary battery, lithium transition metal oxides, including lithium cobalt oxide such as $LiCoO_2$, a lithium nickel oxide such as $LiNiO_2$, a lithium manganese oxide such as $LiMnO_2$ or $LiMn_2O_4$, a lithium iron phosphate compound such as $LiFePO_4$, etc., are developed, and recently, a lithium composite transition metal oxide including two or more transition metals, such as $Li[Ni_aCo_bMn_c]O_2$, $Li[Ni_aCo_bAl_c]O_2$, and $Li[Ni_aCo_bMn_cAl_d]O_2$, is developed and widely used.

In particular, according to technological development of an electric vehicle, etc., demand for a high-capacity secondary battery is increasing, and accordingly, research on a positive electrode using a high-Ni-based positive electrode active material, which is excellent in capacity characteristics, is being actively conducted.

The high-Ni-based positive electrode active material is prepared by mixing a precursor and a lithium raw material and then calcining the mixture. At this time, since the calcination is performed relatively at a low temperature, the amount of residual lithium, which is a by-product, increases on a surface of the positive electrode active material, and the residual lithium in the form of LiOH and/or $Li_2CO_3$ reacts with an electrolyte solution, etc. in a battery, causing problems of gas generation and swelling.

In case of adopting a washing process in order to remove such by-product, the surface of the positive electrode active material is damaged during the washing, causing problems such as reduction in capacity characteristics and rate capability, and a complicated process. There are also problems such that it is difficult to form a uniform coating layer due to difference in energy between the surface of the positive electrode active material and the surface of a coating raw material after the washing, and that the coating raw material is excessively used.

Therefore, it is necessary to secure a technology for reducing by-products on the surface of the positive electrode active material and for improving coating efficiency.

[Prior Art Document]

[Patent Document]

(Patent Document 1) Korean Patent Laid-Open Publication No. 10-2020-0105474.

## DISCLOSURE OF THE INVENTION

### TECHNICAL PROBLEM

To solve the problems as mentioned above, a technical task of the present invention is to provide a preparation method of a positive electrode active material capable of reducing by-products on a surface of a lithium composite transition metal oxide and improving coating efficiency.

### TECHNICAL SOLUTION

To solve the task, the present invention provides a preparation method of a positive electrode active material.

(1) The present invention provides a preparation method of a positive electrode active material including (A) mixing a positive electrode active material precursor and a lithium (Li)-containing raw material, and then calcining the mixture to prepare a lithium composite transition metal oxide; and (B) mixing the lithium composite transition metal oxide and a coating raw material, and then performing a heat treatment to form a coating layer on the lithium composite transition metal oxide, wherein the performing of the heat treatment includes a temperature-rising phase where the temperature rises and a maintenance phase where the temperature is maintained, and a vapor-adding phase is included only during the temperature-rising phase.

(2) The present invention provides the preparation method of the positive electrode active material of (1) above, wherein the positive electrode active material precursor has a composition represented by Chemical Formula 1 below.

[Chemical Formula 1] $\quad\quad Ni_aMn_bCo_cM^1_d(OH)_2$

In Chemical Formula 1 above,
$M^1$ is one or more selected from Al, Zr, W, Mg, Ti, Y, and B, and $0.5 \leq a < 1$, $0 \leq b < 0.5$, $0 \leq c < 0.5$, and $0 \leq d \leq 0.1$.

(3) The present invention provides the preparation method of the positive electrode active material of (1) or (2) above, wherein the calcining is performed at a temperature of 700 °C to 1000 °C.

(4) The present invention provides the preparation method of the positive electrode active material of any one of (1) to (3) above, wherein the lithium composite transition metal oxide has a composition represented by Chemical Formula 2 below.

[Chemical Formula 2] $\quad\quad Li_{1+x1}Ni_{a1}Mn_{b1}Co_{c1}M^2_{d1}O_2$

In Chemical Formula 2 above, $M^2$ is one or more selected from Al, Zr, W, Mg, Ti, Y, and B, and $0.0 \leq x1 \leq 0.10$, $0.5 \leq a1 < 1$, $0 \leq b1 < 0.5$, $0 \leq c1 < 0.5$, and $0 \leq d1 \leq 0.1$.

(5) The present invention provides the preparation method of the positive electrode active material of any one of (1) to (4) above, wherein the lithium composite transition metal oxide has a single-particle form.

(6) The present invention provides the preparation method of the positive electrode active material of any one of (1) to (5) above, wherein washing is not included.

(7) The present invention provides the preparation method of the positive electrode active material of any one of (1) to (6) above, wherein the coating raw material is a hydroxide including one or more selected from Co, Al, and Nb.

(8) The present invention provides the preparation method of the positive electrode active material of any one of (1) to (7) above, wherein the coating raw material is cobalt hydroxide.

(9) The present invention provides the preparation method of the positive electrode active material of any one of (1) to (8) above, wherein the coating raw material is mixed in an amount of 0.5 parts by weight to 5 parts by weight on the basis of 100 parts by weight of the lithium composite transition metal oxide.

(10) The present invention provides the preparation method of the positive electrode active material of any one of (1) to (9) above, wherein the temperature-rising phase includes the vapor-adding phase at a temperature of 600 °C or less.

(11) The present invention provides the preparation method of the positive electrode active material of any one of (1) to (10) above, wherein the temperature-rising phase has a temperature rising rate of 1 °C/min to 10 °C/min.

(12) The present invention provides the preparation method of the positive electrode active material of any one of (1) to (11) above, wherein the vapor is added in an amount that allows a moisture content rate ($\chi$) according to Equation 1 below to become 1% to 10%.

[Equation 1]

$$\chi\,(\%) = \frac{\alpha - \beta}{\alpha} \times 100$$

In Equation 1 above,
$\alpha$ above is a mass (g) of the lithium composite transition metal oxide and the coating raw material immediately after passing the vapor-adding phase, and $\beta$ above is a mass (g) of the lithium composite transition metal oxide and the coating raw material after complete drying immediately after passing the vapor-adding phase.

(13) The present invention provides the preparation method of the positive electrode active material of any one of (1) to (12) above, wherein the vapor-adding phase is performed under an oxidizing atmosphere.

(14) The present invention provides the preparation method of the positive electrode active material of any one of (1) to (13) above, wherein in the maintenance phase, the heat treatment is performed while the temperature is maintained at 500 °C to 900 °C.

(15) The present invention provides the preparation method of the positive electrode active material of any one of (1) to (14) above, wherein the maintenance phase is performed for 1 hour to 12 hours.

(16) The present invention provides the preparation method of the positive electrode active material of any one of (1) to (15) above, wherein the maintenance phase does not include a vapor-adding phase.

## ADVANTAGEOUS EFFECTS

Since a preparation method of the present invention includes a vapor-adding phase during a temperature-rising phase in performing a heat treatment for forming a coating layer, by-products on a surface of a positive electrode active material may be reduced, the coating layer may be formed thinly and uniformly, and coating efficiency may also be improved.

## BRIEF DESCRIPTION OF THE DRAWINGS

FIG. 1 is an electron probe microanalysis (EPMA) mapping image of a positive electrode active material prepared according to Example 1.

FIG. 2 is an EPMA mapping image of a positive electrode active material prepared according to Example 2.

FIG. 3 is an EPMA mapping image of a positive electrode active material prepared according to Example 3.

FIG. 4 is an EPMA mapping image of a positive electrode active material prepared according to Comparative Example 1.

## MODE FOR CARRYING OUT THE INVENTION

Hereinafter, the present invention will be described in more detail in order to aid understanding of the present invention.

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

It will be further understood that the terms 'include', 'provide', 'have' or the like, when used in this specification, specify the presence of stated features, integers, steps, elements, or a combination thereof, but do not preclude the presence or addition of one or more other features, integers, steps, elements, or a combination thereof.

In this specification, the term 'on' means not only the case where an element is formed directly on an upper surface of another element, but also the case where a third element is disposed therebetween.

In this specification, a single-particle form is a concept that contrasts with a spherical secondary-particle form where primary particles measuring several nm to less than 0.5 $\mu$m, prepared in a conventional method, are aggregated, and it means a positive electrode active material in a non-spherical particle form where primary particles measuring 0.5 $\mu$m or greater are aggregated, and/or a lithium composite transition metal oxide.

For example, in the present invention, the positive electrode active material in a single-particle form may be a single particle formed of one primary particle measuring 0.5 $\mu$m or greater, and may also be a form where several primary particles measuring 0.5 $\mu$m or greater are aggregated. Meanwhile, the 'primary particle' means a minimum unit of a particle recognized when the positive electrode active material is observed using a scanning electron microscope.

In this specification, a 'moisture content rate' may be measured by using a heated moisture meter (for example, MX-50 of AND). In particular, about 5 g of a sample is placed on a sample plate in the instrument, then the instrument is closed with a lid and the temperature is set to 100 °C to 150 °C to evaporate moisture included in the powder sample, and the extent to which mass decreases is measured. At this time, the point at which the mass no longer decreases refers to a completely dried state. The moisture content rate may be obtained in a way that masses (g) of the sample before and after complete drying are measured, and the difference between the masses (g) of the sample before and after complete drying relative to the mass (g) of the sample before the complete drying is expressed as a percentage (%).

## Preparation Method of Positive Electrode Active Material

Hereinafter, a preparation method of a positive electrode active material according to the present invention is described.

The preparation method of the positive electrode active material, according to the present invention, includes (A) mixing a positive electrode active material precursor and a lithium (Li)-containing raw material, and then calcining the mixture to prepare a lithium composite transition metal oxide; and (B) mixing the lithium composite transition metal oxide and a coating raw material, and then performing a heat treatment to form a coating layer on the lithium composite transition metal oxide, and the performing of the heat treatment includes a temperature-rising phase where the temperature rises and a maintenance phase where the temperature is maintained, and a vapor-adding phase is included only in the temperature-rising phase.

Hereinafter, the preparation method of the positive electrode active material according to the present invention is described in more detail.

## Step (A)

Mixing a positive electrode active material precursor and a lithium (Li)-containing raw material and then calcining the mixture to prepare a lithium composite transition metal oxide is included.

According to an embodiment of the present invention, the positive electrode active material precursor may have a composition represented by Chemical Formula 1 below.

[Chemical Formula 1] $Ni_aMn_bCo_cM^1_d(OH)_2$

In Chemical Formula 1 above,

$M^1$ is one or more selected from Al, Zr, W, Mg, Ti, Y, and B,
$0.5 \leq a < 1$, $0 \leq b < 0.5$, $0 \leq c < 0.5$, and $0 \leq d \leq 0.1$.
$M^1$ above is a doping element, and in particular, $M^1$ above may be at least one selected from Al, Zr, W, Mg, Ti, Y, and B.

a above is a molar ratio of nickel (Ni) among the entire metal in the positive electrode active material precursor, which may be 0.5 or greater, 0.7 or greater, 0.8 or greater, 0.85 or greater, or 0.88 or greater, and 0.9 or less, 0.95 or less, 0.98 or less, or less than 1. When a falls within the above ranges, high energy density may be exhibited, and thus, high-capacity characteristics may be achieved.

b above is a molar ratio of manganese (Mn) among the entire metal in the positive electrode active material precursor, which may be 0 or greater, 0.03 or greater, 0.05 or greater, or 0.07 or greater, and 0.1 or less, 0.2 or less, 0.3 or less, 0.4 or less, or less than 0.5.

c above is a molar ratio of cobalt (Co) among the entire metal in the positive electrode active material precursor, which may be 0 or greater, 0.01 or greater, 0.02 or greater, or 0.03 or greater, and 0.05 or less, 0.1 or less, 0.2 or less, 0.3 or less, 0.4 or less, or less than 0.5.

d above is a molar ratio of $M^1$ among the entire metal in the positive electrode active material precursor, which may be 0 or greater, 0.01 or greater, 0.02 or greater, 0.03 or greater, or 0.04 or greater, and 0.05 or less, 0.06 or less, 0.07 or less, 0.08 or less, or less than 0.1.

When a, b, c, and d above fall within the above ranges, respectively, a positive electrode active material having excellent energy density and having high-capacity characteristics may be achieved.

The transition metal hydroxide, having the composition represented by Chemical Formula 1 above, may be a commercial product, or may be prepared according to a preparation method of a transition metal hydroxide well-known in the field of relevant art, such as coprecipitation.

The lithium (Li)-containing raw material may be a lithium-containing sulfate, nitrate, carbonate, or hydroxide. In particular, the lithium raw material may be $Li_2CO_3$, $LiNO_3$, $LiNO_2$, LiOH, $LiOH \cdot H_2O$, LiH, LiBr, LiI, $Li_2O$, $Li_2SO_4$, etc.

The positive electrode active material precursor and the lithium (Li)-containing raw material may be mixed such that a molar ratio (M:Li) of a transition metal (M) contained in the positive electrode active material precursor and lithium (Li) contained in the lithium (Li)-containing raw material becomes 1:1.00 to 1.10. In this case, it may be possible not only to prevent excessive lithium from being included in a structure of the positive electrode active material, but also to have unreacted residual lithium in small amount.

The mixing may be performed by dry mixing or wet mixing. In a case where the components are mixed through the dry mixing, a calcination process may be performed without a separate drying process. In a case where the components are mixed through the wet mixing, the components may be added to a solvent, specifically water, or to a mixture of an organic solvent, capable of being uniformly mixed with water (specifically, alcohol, etc.), and water, to prepare the mixing, or a solution containing each raw material, specifically an aqueous solution, is prepared, then the solutions are mixed together, and the mixed components are spray-dried and a calcination process is then performed.

Each of the raw materials and the positive electrode active material precursor may be used in an appropriate amount in consideration of an amount of each of the metal elements in a lithium composite metal oxide to be finally prepared.

According to an embodiment of the present invention, the calcination may be performed at a temperature of 700 °C or greater, 750 °C or greater, 800 °C or greater, and 850 °C or less, 900 °C or less, 950 °C or less, or 1000 °C or less. In addition, the calcination may be performed for 10 hours or more, 15 hours or more, or 20 hours or more, and 25 hours or less, 30 hours or less, or 40 hours or less, and the calcination may be performed under an oxygen atmosphere. When the calcination is performed in the above temperature range, time range, and atmosphere, the lithium (Li)-containing raw material may melt effectively, and the reaction between the positive electrode active material precursor and the lithium (Li)-containing raw material may be facilitated, so that a lithium composite transition metal oxide particle may grow effectively.

According to an embodiment of the present invention, the lithium composite transition metal oxide may have a composition represented by Chemical Formula 2 below.

$$[\text{Chemical Formula 2}] \qquad Li_{1+x1}Ni_{a1}Mn_{b1}Co_{c1}M^2_{d1}O_2$$

In Chemical Formula 2 above,

$M^2$ is one or more selected from Al, Zr, W, Mg, Ti, Y, and B,
$0.0 \leq x1 \leq 0.10$, $0.5 \leq a1 < 1$, $0 \leq b1 < 0.5$, $0 \leq c1 < 0.5$, and $0.0 \leq d1 \leq 0.1$.

$M^2$ above is a doping element, and in particular, $M^2$ above may be at least one selected from Al, Zr, W, Mg, Ti, Y, and B. $M^2$ above may not be necessarily included, but if included in an appropriate amount, the particle shape of the positive electrode active material may be improved, and stability of crystal structure may be improved.

x1 above may be 0 or greater, 0.01 or greater, 0.02 or greater, 0.03 or greater, or 0.04 or greater, and 0.05 or less, 0.06 or less, 0.07 or less, 0.08 or less, or less than 0.1.

a1 above is a molar ratio of nickel (Ni), among the entire metal other than lithium, in the lithium composite transition metal oxide, which may be 0.5 or greater, 0.7 or greater, 0.8 or greater, 0.85 or greater, or 0.88 or greater, and 0.9 or less, 0.95 or less, 0.98 or less, or less than 1. When a1 falls within the above ranges, high energy density may be exhibited and thus, high-capacity characteristics may be achieved.

b1 above is a molar ratio of manganese (Mn), among the entire metal other than lithium, in the lithium composite transition metal oxide, which may be 0 or greater, 0.03 or greater, 0.05 or greater, or 0.07 or greater, and 0.1 or less, 0.2 or less, 0.3 or less, 0.4 or less, or less than 0.5.

c1 above is a molar ratio of cobalt (Co), among the entire metal other than lithium, in the lithium composite transition metal oxide, which may be 0 or greater, 0.01 or greater, 0.02 or greater, or 0.03 or greater, and 0.05 or less, 0.1 or less, 0.2 or less, 0.3 or less, 0.4 or less, or less than 0.5.

d1 above is a molar ratio of $M^2$, among the entire metal other than lithium in the lithium composite transition metal oxide, which may be 0 or greater, 0.01 or greater, 0.02 or greater, 0.03 or greater, or 0.04 or greater, and 0.05 or less, 0.06 or less, 0.07 or less, 0.08 or less, or less than 0.1. When d1 falls within the above ranges, stability of the crystal structure of the positive electrode active material may be improved, output characteristics, capacity characteristics, and lifetime characteristics may be improved.

x1, a1, b1, c1, and d1 above fall within the above ranges, respectively, a positive electrode active material having excellent energy density and having high-capacity characteristics may be achieved.

According to an embodiment of the present invention, the lithium composite transition metal oxide may have a single-particle form. When the lithium composite transition metal oxide has a single-particle form, the positive electrode active material, including the lithium composite transition metal oxide, may have improved structural stability. In this regard, when rolling or driving a cell to prepare an electrode, micro/macro-cracks on a particle, due to a grain boundary, may be suppressed, and the area of grain boundary, which is in contact with an electrolyte solution, may decrease, so that gas generation caused by side reactions with the electrolyte solution may be reduced, thereby improving lifetime characteristics of a secondary battery.

**Step (B)**

Mixing the lithium composite transition metal oxide and a coating raw material and then performing a heat treatment to form a coating layer on the lithium composite transition metal oxide is included, and the performing of the heat treatment includes a temperature-rising phase in which the temperature rises, and a maintenance phase in which the temperature is maintained, and a vapor-adding phase is included only during the temperature-rising phase.

Conventionally, when forming the coating layer on the lithium composite transition metal oxide, the coating raw material was used in an excessive amount, or washing treatment was performed, in order to reduce by-products on the surface of the lithium composite transition metal oxide. However, in case of using the excessive amount of the coating raw material, there were problems of by-products still existing and decreased efficiency, and in case of performing the washing treatment, there were problems of damage on the surface of the positive electrode active material, complicated process, and low economic feasibility.

The present inventors discovered that, when forming the coating layer on the lithium composite transition metal oxide, by mixing the lithium composite transition metal oxide and the coating raw material and then adding vapor in a particular phase of the temperature-rising phase during performing the heat treatment, by-products on the surface of the lithium composite transition metal oxide may be reduced, and the coating layer may be formed thinly and uniformly, and also coating efficiency may be improved, and therefore, the present inventors have completed the present invention.

Meanwhile, in the performing of the heat treatment, in case of adding vapor in the maintenance phase in which the temperature is maintained, since the vapor facilitates reduction reaction of $Li_2O$ and $H_2O$, there are problems that residual lithium, which is a by-product on the surface of the lithium composite transition metal oxide, increases, and the coating efficiency decreases.

According to an embodiment of the present invention, the coating layer may have a discontinuous form or continuous form.

According to an embodiment of the present invention, washing may not be included. As a result, there are effects of preventing damage on the surface of the positive electrode active material, simplifying the process, and improving economic feasibility.

According to an embodiment of the present invention, the coating raw material may be a hydroxide containing one or more selected from Co, Al, and Nb. In particular, in case of cobalt hydroxide, resistance characteristics of the lithium transition metal oxide may be improved, so that output and capacity characteristics may be improved.

According to an embodiment of the present invention, the coating raw material may be mixed in an amount of 0.5 parts by weight or greater, 1 part by weight or greater, 1.5 parts by weight or greater, or 2 parts by weight or greater, and 3 parts by weight or less, 4 parts by weight or less, or 5 parts by weight or less on the basis of 100 parts by weight of the lithium composite transition metal oxide. When the mixed amount of the coating raw material falls within the above ranges, the coating layer may be thin and uniform, the coating efficiency is improved, and economical effect is achieved.

Meanwhile, the performing of the heat treatment includes the temperature-rising phase in which the temperature rises and the maintenance phase in which the temperature is maintained, and the vapor-adding phase is included only in the temperature-rising phase. That is, the vapor-adding phase exits only in the temperature-rising phase, and in a phase other than the temperature-rising phase, the vapor-adding phase is not included. In particular, the maintenance phase may not include the vapor-adding phase. When the vapor-adding phase is included in the temperature-rising phase, the vapor facilitates reaction of the coating raw material and the residual lithium, so that an additional washing process for removing by-products on the surface may not be performed, thereby reducing the by-products on the surface of the lithium composite transition metal oxide and simplifying the process, compared to the conventional method. Meanwhile, if the vapor-adding phase is included in a phase other than the temperature-rising phase, particularly in the maintenance phase, the vapor facilitates reduction reaction of $Li_2O$ and $H_2O$, so that there is a problem of increased residual lithium that is a by-product on the surface of the lithium composite transition metal oxide, and there is a problem of decreased coating efficiency.

According to an embodiment of the present invention, the temperature-rising phase may include the vapor-adding phase at a temperature of 600 °C or less. In particular, the vapor-adding phase at a temperature of 0 °C to 250 °C, the vapor-adding phase at a temperature of 250 °C to 500 °C, the vapor-adding phase at a temperature of 0 °C to 500 °C, or the like may be included. When the vapor-adding phase is included in the above temperature ranges, the reaction of the coating raw material and the residual lithium may be effectively controlled, so that sufficient calories necessary for the reaction may be supplied.

According to an embodiment of the present invention, the temperature rising rate in the temperature-rising phase may be 1 °C/min or greater, 2 °C/min or greater, 3 °C/min or greater, or 4 °C/min or greater, and 6 °C/min or less, 7 °C/min or less, 8 °C/min or less, 9 °C/min or less, or 10 °C/min or less. When the temperature rising rate in the temperature-rising phase falls within the above ranges, the output is excellent, and the temperature of the lithium composite transition metal oxide and the coating raw material is similar to that of a reactor, so that all calories at the set maintenance temperature may be received. In particular, when the temperature rising rate is 5 °C/min, calories necessary for the reaction may be effectively supplied.

According to an embodiment of the present invention, the vapor may be added in an amount that allows a moisture content rate ($\chi$), according to Equation 1 below, to become 1% or greater, 2% or greater, 3% or greater, 4% or greater, or 5% or greater, and 6% or less, 7% or less, 8% or less, 9% or less, or 10% or less.

[Equation 1]

$$\chi\,(\%) = \frac{\alpha - \beta}{\alpha} \times 100$$

In Equation 1 above,

$\alpha$ above is a mass (g) of the lithium composite transition metal oxide and the coating raw material immediately after passing the vapor-adding phase, and $\beta$ above is a mass (g) of the lithium composite transition metal oxide and the coating raw material after complete drying immediately after passing the vapor-adding phase.

According to an embodiment of the present invention, the vapor-adding phase may be performed under an oxidizing atmosphere. In this case, by providing the atmosphere necessary for reaction, the reaction of the coating raw material and the residual lithium may be effectively controlled.

According to an embodiment of the present invention, the heat treatment may be performed in the maintenance phase where the temperature is maintained at 500 °C or greater, 600 °C or greater, or 700 °C or greater, and 800 °C or less, 850 °C or less, or 900 °C or less. When the temperature in the maintenance phase falls within the above ranges, the coating raw material melts, and the surface of the lithium composite transition metal oxide is recrystallized, and thus there is a stabilization effect on the surface of the positive electrode active material.

According to the present invention, the maintenance phase may be performed for 1 hour or more, or 2 hours or more, and 3 hours or less, 5 hours or less, or 12 hours or less. When the duration of the maintenance phase falls within the above ranges, sufficient thermal energy is supplied to the lithium composite transition metal oxide and the coating raw material, which has an effect of making the overall coating uniform.

**Positive Electrode Active Material**

In addition, the present invention provides the positive electrode active material prepared in the preparation method previously described.

The positive electrode active material according to the present invention, which is prepared in the preparation method previously described, is a positive electrode active material where a uniform coating layer is present on a lithium composite transition metal oxide. The coating layer may have a small concentration deviation of a coating element.

**Positive Electrode**

In addition, the present invention provides a positive electrode for a lithium secondary battery including the positive electrode active material previously described.

In particular, the positive electrode includes a positive electrode current collector, and a positive electrode active material layer positioned on at least one side of the positive electrode current collector and containing the positive electrode active material previously described.

The positive electrode current collector is not particularly limited as long as it does not cause chemical change to a battery and has conductivity, and for example, stainless-steel, aluminum, nickel, titanium, calcined carbon, or aluminum or stainless-steel that is surface-treated with carbon, nickel, titanium, silver, etc. may be used. In addition, the positive electrode current collector may generally have a thickness of 3 to 500 $\mu$m, and microscopic irregularities may be formed on a surface of the current collector to improve adhesion of the positive electrode active material. For example, the positive electrode current collector may be used in various forms including a film, a sheet, a foil, a net, a porous body, a foam body, a non-woven fabric body, etc.

The positive electrode active material layer may include a conductive material and a binder, together with the positive electrode active material.

At this time, the positive electrode active material may be included in an amount of 80 to 99 wt%, and more particularly, 85 to 98 wt% on the basis of the total weight of the positive electrode active material layer. When the amount to be included falls within the above ranges, excellent capacity characteristics may be exhibited.

At this time, the conductive material may be used to provide conductivity to an electrode, and any material may be used in the battery, without particular limitation, as long as it does not cause chemical change and conducts electrons. Specific examples may be graphite such as natural graphite or artificial graphite; a carbon-based material including carbon black, acetylene black, ketjen black, channel black, furnace black, lamp black, thermal black, a carbon fiber, etc.; a powder or fiber of metal including copper, nickel, aluminum, silver, etc.; a conductive whisker including zinc oxide, potassium titanate, etc.; a conductive metal oxide such as titanium oxide; or a conductive polymer such as a polyphenylene derivative, and any one alone or a mixture of two or more thereof may be used. The conductive material may be included in an amount of 1 to 30 wt% on the basis of the total weight of the positive electrode active material layer.

The binder serves to improve binding between the positive electrode active material particles and adhesion between the positive electrode active material and the current collector. Specific examples may include polyvinylidene fluoride (PVDF), vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), fluorine rubber, or various copolymers thereof, and any one alone or a mixture of two or more thereof may be used. The binder may be included in an amount of 1 to 30 wt% on the basis of the total weight of the positive electrode active material layer.

The positive electrode may be prepared according to a general preparation method for a positive electrode, except that the above-described positive electrode active material is used. In particular, the positive electrode active material, and selectively, a binder and a conductive material may be dissolved or dispersed in a solvent to prepare a positive electrode composite material, and the positive electrode composite material may be applied onto the positive electrode current collector, and then dried and pressed to prepare the positive electrode. At this time, the type and the amount of each of the positive electrode active material, the binder, and the conductive material are the same as previously described.

The solvent may be a solvent generally used in the relevant art, including dimethyl sulfoxide (DMSO), isopropyl alcohol, N-methylpyrrolidone (NMP), acetone, water, or the like, and any one alone or a mixture of two or more thereof may be used. The amount of the solvent to be used is sufficient if it dissolves or disperses the positive electrode active material, the conductive material, and the binder in consideration of the thickness of the slurry to be applied and the manufacturing yield, and it provides a viscosity that allows excellent thickness uniformity upon application for preparation of the positive electrode thereafter.

Also, in another method, casting of the positive electrode composite material may also be performed on a separate support, and a film separated from the support may then be laminated onto the positive electrode current collector to thereby prepare the positive electrode.

**Lithium Secondary Battery**

In addition, according to the present invention, an electro-chemical device including the positive electrode may be prepared. The electro-chemical device may be, particularly, a battery, a capacity, etc., and more particularly a lithium secondary battery.

The lithium secondary battery includes, particularly, a positive electrode, a negative electrode opposed to the positive electrode, a separator disposed between the positive electrode and the negative electrode, and an electrolyte, and since the positive electrode is the same as previously described, detailed description thereof will be omitted, and the other components will only be described in detail.

In addition, the lithium secondary battery may selectively further include a battery case that accommodates an electrode assembly of the positive electrode, the negative electrode, and the separator, and a sealing member that seals the battery case.

In the lithium secondary battery, the negative electrode includes a negative electrode current collector and a negative electrode active material layer positioned on the negative electrode current collector.

The negative electrode current collector is not particularly limited as long as it does not cause chemical changes to a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 $\mu$m to 500 $\mu$m, and like the positive electrode current collector, microscopic irregularities may be formed on a surface of the current collector to strengthen adhesion of the negative electrode active material. For example, the negative electrode current collector may be used in various forms including a film, a sheet, a foil, a net, a porous body, a foam body, a non-woven fiber body, etc.

The negative electrode active material layer includes, selectively, a binder and a conductive material, together with the negative electrode active material.

A compound capable of reversible intercalation and deintercalation of lithium may be used as the negative electrode active material. Specific examples may be a carbon-based material including artificial graphite, natural graphite, graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping or dedoping lithium such as $SiO_\beta(0<\beta<2)$, $SnO_2$, vanadium oxide, and lithium vanadium oxide; or a composite containing the metal-based compound and the carbon-based material such as a Si-C composite or a Sn-C composite, and any one or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include amorphous, plate-shaped, scaly, spherical, or fibrous natural graphite or artificial graphite, kish graphite, pyrolytic carbon, mesophase pitch based carbon fiber, meso-carbon microbeads, mesophase pitches, and high-temperature calcined carbon such as petroleum or coal tar pitch derived cokes.

The negative electrode active material may be included in an amount of 80 wt% to 99 wt% on the basis of the total weight of the negative electrode active material layer.

The binder is a component that aids binding between the conductive material, the active material, and the current collector, and generally is added in an amount of 0.1 wt% to 10 wt% on the basis of the total weight of the negative electrode active material layer. Examples of this binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, various copolymers thereof, etc.

The conductive material is a component that further improves conductivity of the negative electrode active material, and may be added in an amount of 10 wt% or less, and preferably 5 wt% or less on the basis of the total weight of the negative electrode active material layer. The conductive material may not be particularly limited as long as it does not cause chemical change in the relevant battery and has conductivity, and for example, graphite such as natural graphite or artificial graphite; carbon black including acetylene black, ketjen black, channel black, furnace black, lamp black, thermal black, etc.; a conductive fiber including a carbon fiber, metal fiber, or the like; fluorocarbon; metal powder including aluminum power, nickel powder, etc.; a conductive whisker including zinc oxide, potassium titanate, etc.; a conductive metal oxide such as titanium oxide; a conductive material such as a polyphenylene derivative, etc. may be used.

The negative electrode active material, and selectively, the binder and the conductive material may be dissolved or dispersed in a solvent to prepare a negative electrode composite material, and the negative electrode composite material may be applied onto the negative electrode current collector, and dried to prepare the negative electrode active material layer, or casting of the negative electrode composite material may be performed on a separate support, and a film separated from the support may then be laminated onto the negative electrode current collector to thereby prepare the negative electrode active material layer.

Meanwhile, in the lithium secondary battery, the separator separates the negative electrode and the positive electrode, and provides a movement path of lithium ions, any separator generally used for a lithium secondary battery may be used without particular limitation, and particularly, a separator having low resistance to ion movement in an electrolyte and having excellent electrolyte solution moisture-absorbing capability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high meting point, polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and the type is not limited thereto.

In particular, the electrolyte may include an organic solvent and a lithium salt.

Any organic solvent may be used as the organic solvent, without particular limitation, as long as it may serve as a medium through which ions involved in an electrochemical reaction of the battery may move. In particular, as the organic solvent, an ester-based solvent including methyl acetate, ethyl acetate, $\gamma$-butyrolactone, $\varepsilon$-caprolactone, etc.; an ether-based solvent including dibutyl ether, tetrahydrofuran, or the like; a ketone-based solvent such as cyclohexanone; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylenecarbonate (EC), propylene carbonate (PC), etc.; an alcohol-based solvent including ethylalcohol, isopropyl alcohol, etc.; nitriles such as R-CN (where, R is a linear, branched, or cyclic C2 to 20 hydrocarbon group, and may include a double-bond aromatic ring or an ether bond); amides such as dimethylformamide; dioxolanes such as 1,3-dioxolane; sulfolanes, or the like may be used. Among these, a carbonate-based solvent is preferred, and a mixture of a cyclic carbonate (for example, ethylene carbonate, propylene carbonate, or the like) having high ionic conductivity and high dielectric constant capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$, or the like may be used as the lithium salt. The lithium salt may be used in a concentration range of 0.1 to 4.0 M, and preferably of 0.1 to 2.0 M. When the concentration of lithium salt falls within the above range, the electrolyte may have appropriate conductivity and viscosity, and therefore, excellent performance of the electrolyte may be exhibited, and lithium ions may move effectively.

In addition to the electrolyte components, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like may also be further included in the electrolyte in order to improve lifetime characteristics of the battery, suppress the reduction in battery capacity, and improve discharge capacity of the battery. At this time, the additive may be included in an amount of 0.1 to 5 parts by weight on the basis of 100 parts by weight total weight of the electrolyte.

As previously described, since the lithium secondary battery including the positive electrode active material, according to the present invention, stably exhibits excellent lifetime characteristics, etc., it is useful in the field of portable devices, such as a mobile phone, a laptop computer, and a digital camera, and in the field of electric vehicles such as a hybrid electric vehicle (HEV).

Therefore, according to another embodiment of the present invention, a battery module including the lithium secondary battery as a unit cell and a battery pack including the battery module are provided.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

An outer shape of the lithium secondary battery of the present invention is not particularly limited, but may include a cylindrical type using a can, a prismatic type, a pouch type, a coin type, or the like.

The lithium secondary battery according to the present invention may not only be used in a battery cell that is used as a power source of a small-sized device, but may also be preferably used as a unit battery in a medium and large-sized battery module including a plurality of battery cells.

Hereinafter, the present invention is described in detail through examples. However, the examples according to the present invention may be modified into various other forms, and the scope of the present invention should not be construed as being limited to the examples to be described in detail below. The examples of the present invention are provided to more completely explain the present invention to those with average knowledge in the art.

## MODE FOR CARRYING OUT THE INVENTION

### Example and Comparative Example

### Example 1

$Ni_{0.885}Co_{0.035}Mn_{0.08}(OH)_2$ and LiOH were mixed such that a molar ratio of (Ni+Co+Mn) : Li became 1: 1.03, and then calcined under an oxidizing atmosphere at 800 °C for 22 hours to prepare a lithium composite transition metal oxide in a single-particle form having a composition represented by $LiNi_{0.885}Co_{0.035}Mn_{0.08}O_2$.

$Co(OH)_2$ was mixed in an amount of 2.5 parts by weight on the basis of 100 parts by weight of the lithium composite transition metal oxide, then while vapor was added to a furnace at a rate of 2.0 kg/hour, the temperature was increased at a rate of 5 °C/min from 0 °C to 500 °C under an oxidizing atmosphere, then the adding of vapor was terminated, and the temperature was increased at a rate of 5 °C/min from 500 °C to 700 °C under an oxidizing atmosphere. Thereafter, while the temperature was maintained at 700 °C for 2 hours under an oxidizing atmosphere, a heat treatment was performed to prepare a positive electrode active material in which a coating layer containing Co was formed on the lithium composite transition metal oxide.

### Example 2

$Co(OH)_2$ was mixed in an amount of 2.5 parts by weight on the basis of 100 parts by weight of the lithium composite transition metal oxide prepared according to Example 1, then while vapor was added to a furnace at a rate of 2.0 kg/hour, the temperature was increased at a rate of 5 °C/min from 0 °C to 250 °C under an oxidizing atmosphere, then the adding of vapor was terminated, and the temperature was increased at a rate of 5 °C/min from 250 °C to 700 °C under an oxidizing atmosphere. Thereafter, while the temperature was maintained at 700 °C for 2 hours under an oxidizing atmosphere, a heat treatment was performed to prepare a positive electrode active material in which a coating layer containing Co was formed on the lithium composite transition metal oxide.

### Example 3

$Co(OH)_2$ was mixed in an amount of 2.5 parts by weight on the basis of 100 parts by weight of the lithium composite transition metal oxide prepared according to Example 1, then the temperature was increased at a rate of 5 °C/min from 0 °C to 250 °C, and while vapor was added to a furnace at a rate of 2.0 kg/hour, the temperature was increased at a rate of 5 °C/min from 250 °C to 500 °C under an oxidizing atmosphere, then the adding of vapor was terminated, and the temperature was increased at a rate of 5 °C/min from 250 °C to 700 °C under an oxidizing atmosphere. Thereafter, while the temperature was maintained at 700 °C for 2 hours under an oxidizing atmosphere, a heat treatment was performed to prepare a positive electrode active material in which a coating layer containing Co was formed on the lithium composite transition metal oxide.

**Comparative Example 1**

$Co(OH)_2$ was mixed in an amount of 2.5 parts by weight on the basis of 100 parts by weight of the lithium composite transition metal oxide prepared according to Example 1, then the temperature was increased at a rate of 5 °C/min from 0 °C to 700 °C under an oxidizing atmosphere, and then while the temperature was maintained at 700 °C for 2 hours under an oxidizing atmosphere, a heat treatment was performed to prepare a positive electrode active material in which a coating layer containing Co was formed on the lithium composite transition metal oxide.

**Comparative Example 2**

$Co(OH)_2$ was mixed in an amount of 2.5 parts by weight on the basis of 100 parts by weight of the lithium composite transition metal oxide prepared according to Example 1, then the temperature was increased at a rate of 5 °C/min from 0 °C to 700 °C under an oxidizing atmosphere, and then while vapor was added to a furnace at a rate of 2.0 kg/hour and the temperature was maintained at 700 °C for 2 hours under an oxidizing atmosphere, a heat treatment was performed to prepare a positive electrode active material in which a coating layer containing Co was formed on the lithium composite transition metal oxide.

**Comparative Example 3**

$Co(OH)_2$ was mixed in an amount of 2.5 parts by weight on the basis of 100 parts by weight of the lithium composite transition metal oxide prepared according to Example 1, then while vapor was added to a furnace at a rate of 2.0 kg/hour, the temperature was increased at a rate of 5 °C/min from 0 °C to 500 °C under an oxidizing atmosphere, then the adding of vapor was terminated, and the temperature was increased at a rate of 5 °C/min from 500 °C to 700 °C under the oxidizing atmosphere. Thereafter, while vapor was added to the furnace at a rate of 2.0 kg/hour and the temperature was maintained at 700 °C for 2 hours under an oxidizing atmosphere, a heat treatment was performed to prepare a positive electrode active material in which a coating layer containing Co was formed on the lithium composite transition metal oxide.

**Experimental Example**

**Experimental Example 1: Evaluation on Residual Lithium**

To test the quality of each of the positive electrode active materials prepared according to Examples 1 to 3 and Comparative Examples 1 to 3 above, the amount of residual lithium present on the surface of the positive electrode active material was measured.
In particular, in order to measure the amount of residual lithium present on the surface of each of the positive electrode active materials, prepared according to Examples 1 to 3 and Comparative Examples 1 to 3 above, pH titration was performed. Metrohm was used, as a pH meter, to titrate 1 mL each, and the pH values were recorded. In particular, 5 g of each of the positive electrode active material powders, prepared according to Examples 1 to 3 and Comparative Examples 1 to 3, and 100 mL of distilled water were agitated. While 1 N of HCl solution was added to the solution, the pH was titrated, the amounts of $Li_2CO_3$ and LiOH were obtained, and the results were listed in Table 1 below.

[Table 1]

|  | $Li_2CO_3$ (wt%) | LiOH (wt%) | Total sum of residual lithium ($Li_2CO_3$+LiOH) (wt%) |
|---|---|---|---|
| Example 1 | 0.13 | 0.08 | 0.21 |
| Example 2 | 0.13 | 0.1 | 0.24 |
| Example 3 | 0.13 | 0.07 | 0.19 |
| Comparative Example 1 | 0.25 | 0.14 | 0.39 |

(continued)

| | Li$_2$CO$_3$ (wt%) | LiOH (wt%) | Total sum of residual lithium (Li$_2$CO$_3$+LiOH) (wt%) |
|---|---|---|---|
| Comparative Example 2 | 0.29 | 0.26 | 0.55 |
| Comparative Example 3 | 0.34 | 0.25 | 0.59 |

Referring to Table 1, it can be seen that the amounts of by-products present in the form of Li$_2$Co$_3$ and LiOH on the surfaces of the positive electrode active materials prepared according to Examples 1 to 3, where the vapor-adding phase was included only in the temperature-rising phase, were lower than the amounts of by-products (total sum of residual lithium) present on the surfaces of the positive electrode active material prepared according to Comparative Example 1, where the vapor-adding phase was not included in the temperature-rising phase and the maintenance phase, the positive electrode active material prepared according to Comparative Example 2, where the vapor-adding phase was included in the maintenance phase, and the positive electrode active material prepared according to Comparative Example 3 where the vapor-adding phase was included in the temperature-rising phase and the maintenance phase.

**Experimental Example 2: Evaluation on Coating Efficiency**

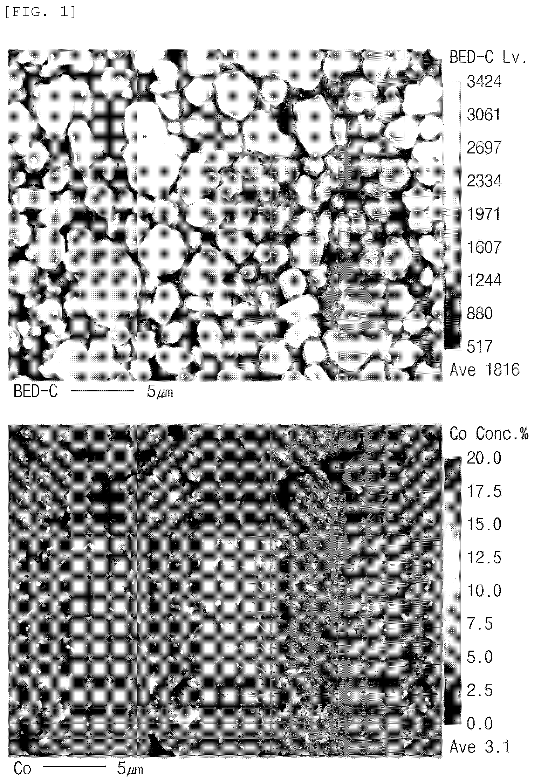

Respective EPMA mapping images of the positive electrode active materials, prepared according to Examples 1 to 3 and Comparative Example 1 above, were shown in FIGS. 1 to 4 in sequence.

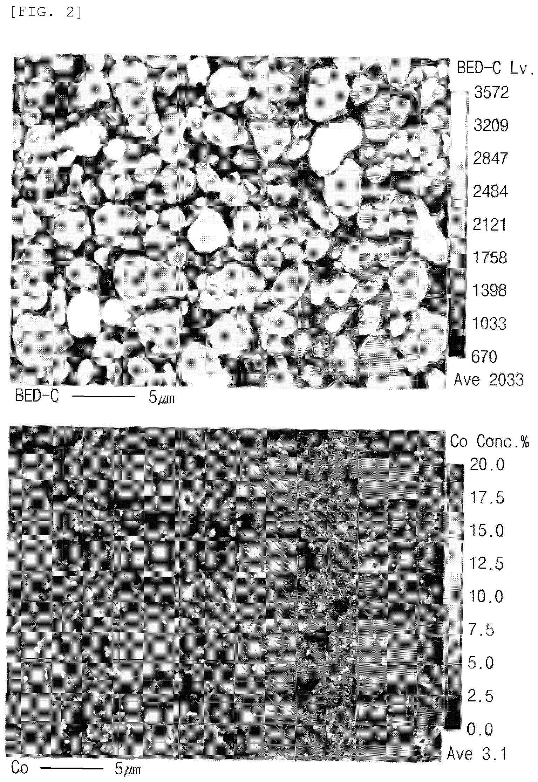

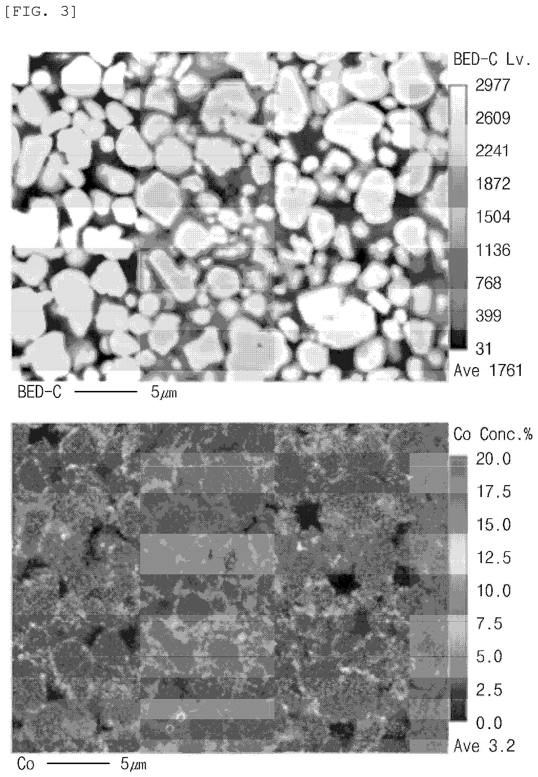

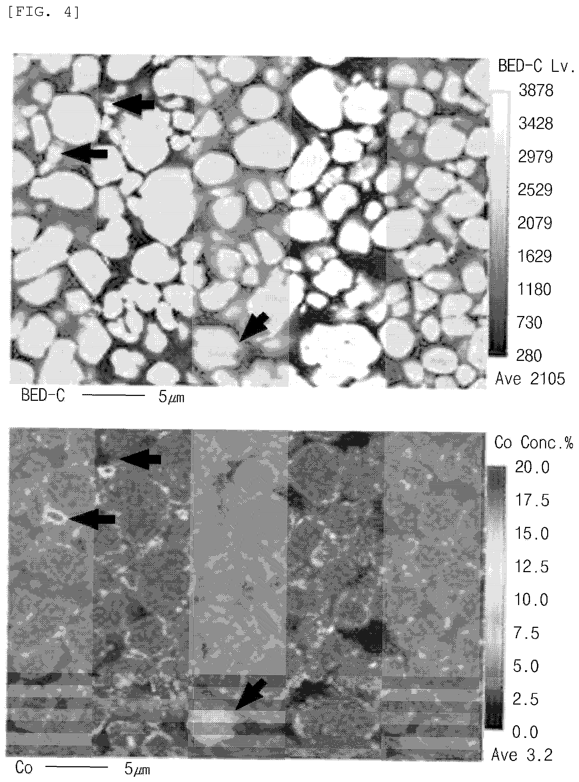

In particular, the EPMA is a technique to determine the concentration and distribution of elements in solid samples through analysis of emitted X-rays by EDS after bombarding sample particles with an electron beam, and by using EPMA (under conditions of JXA-8350F, -15kV, 20nA stage mapping) of each of the positive electrode active materials, prepared according to Examples 1 to 3 and Comparative Example 1 above, Co distribution in the positive electrode active material was obtained. FIG. 1 is an electron probe microanalysis (EPMA) mapping image of the positive electrode active material prepared according to Example 1, FIG. 2 is an EPMA mapping image of the positive electrode active material prepared according to Example 2, FIG. 3 is an EPMA mapping image of the positive electrode active material prepared according to Example 3, and FIG. 4 is an EPMA mapping image of the positive electrode active material prepared according to Comparative Example 1.

In each of FIGS. 1 to 4 below, the portion indicated by the arrow is a portion where the coating layer containing Co exists in clumps. In case of Comparative Example 1 where the vapor-adding phase was not included in the temperature-rising phase, the coating layer containing Co had a lot of clumping, compared to the cases of Examples 1 to 3.

Consequently, it can be seen that, in a case where the vapor-adding phase was included only in the temperature-rising phase, the coating layer was formed thinly and uniformly, so that concentration deviation of the coating element, on the positive electrode active material, was reduced, and the coating efficiency was improved.

**Experimental Example 3: Evaluation on Moisture content rate**

To measure the amounts of moisture present in the powders prepared according to Examples 1 to 3 and Comparative Examples 1 to 3 above, the moisture content rate of each of the powders, prepared according to Examples 1 to 3 and Comparative Examples 1 to 3, was measured using a heated moisture meter (MX-50 of AND), and the results were listed in Table 2 below.

Specifically, in each of Examples 1 to 3 and Comparative Examples 1 to 3 above, the lithium composite transition metal oxide and the coating raw material immediately after passing the vapor-adding phase were obtained, about 5 g thereof was placed on a sample plate in the instrument, and then the instrument was closed with a lid and the temperature of the sample plate was set to 130 °C to evaporate the moisture contained in the lithium composite transition metal oxide and the coating raw material, and the extent to which mass decreases was measured. At this time, the point at which the mass no longer decreases refers to a completely-dried state.

The moisture content rate ($\chi$), that is a percentage value (moisture content rate (%)) of the difference between the mass (g) of the lithium composite transition metal oxide and the coating raw material immediately after passing the vapor-adding phase and the mass (g) of the lithium composite transition metal oxide and the coating raw material after complete drying immediately after passing the vapor-adding phase, relative to the mass (g) of the lithium composite transition metal oxide and the coating raw material immediately after passing the vapor-adding phase, was listed in Table 2 below.

Meanwhile, in case of Comparative Example 1 where the vapor-adding phase was not included, the percentage value (moisture content rate (%)) of the difference between the mass (g) of the lithium composite transition metal oxide and the coating raw material and the mass (g) of the lithium composite transition metal oxide and the coating raw material after complete drying, relative to the mass (g) of the lithium composite transition metal oxide and the coating raw material, was listed in Table 2 below.

[Table 2]

| Classification | Moisture content rate (%) |
|---|---|
| Example 1 | 5.2 |
| Example 2 | 1.7 |
| Example 3 | 3.5 |
| Comparative Example 1 | 0.3 |
| Comparative Example 2 | 10.3 |
| Comparative Example 3 | 11.7 |

Referring to Table 2, it can be seen that, in case of Examples 1 to 3 where the vapor-adding phase was included only in the temperature-rising phase, the moisture content rate was 1.7% to 5.2%.

As a result, it can be seen that, by adding the vapor such that the above moisture content rate was satisfied, the by-products, present on the surface of the positive electrode active material, and the coating raw material reacted appropriately. and thus, the overall coating became uniform.

**Claims**

1. A preparation method of a positive electrode active material, comprising:

   (A) mixing a positive electrode active material precursor and a lithium (Li)-containing raw material, and then calcining the mixture to prepare a lithium composite transition metal oxide; and
   (B) mixing the lithium composite transition metal oxide and a coating raw material, and then performing a heat treatment to form a coating layer on the lithium composite transition metal oxide,

   wherein the performing of the heat treatment includes a temperature-rising phase in which a temperature rises and a maintenance phase in which a temperature is maintained, and
   a vapor-adding phase is included only during the temperature-rising phase.

2. The preparation method of claim 1, wherein the positive electrode active material precursor has a composition represented by Chemical Formula 1 below:

   [Chemical Formula 1] $\quad\quad Ni_aMn_bCo_cM^1_d(OH)_2$

   where, in Chemical Formula 1 above,
   $M^1$ is one or more selected from Al, Zr, W, Mg, Ti, Y, and B, and
   $0.5 \leq a < 1$, $0 \leq b < 0.5$, $0 \leq c < 0.5$, and $0 \leq d \leq 0.1$.

3. The preparation method of claim 1, wherein the calcining is performed at a temperature of 700 °C to 1000 °C.

4. The preparation method of claim 1, wherein the lithium composite transition metal oxide has a composition represented by Chemical Formula 2 below:

   [Chemical Formula 2] $\quad\quad Li_{1+x1}Ni_{a1}Mn_{b1}Co_{c1}M^2_{d1}O_2$

   where, in Chemical Formula 2 above,
   $M^2$ is one or more selected from Al, Zr, W, Mg, Ti, Y, and B, and
   $0.0 \leq x1 \leq 0.10$, $0.5 \leq a1 < 1$, $0 \leq b1 < 0.5$, $0 \leq c1 < 0.5$, and $0 \leq d1 \leq 0.1$.

5. The preparation method of claim 1, wherein the lithium composite transition metal oxide has a single-particle form.

**6.** The preparation method of claim 1, wherein washing is not included.

**7.** The preparation method of claim 1, wherein the coating raw material is a hydroxide comprising one or more selected from Co, Al, and Nb.

**8.** The preparation method of claim 1, wherein the coating raw material is cobalt hydroxide.

**9.** The preparation method of claim 1, wherein the coating raw material is mixed in an amount of 0.5 parts by weight to 5 parts by weight on the basis of 100 parts by weight of the lithium composite transition metal oxide.

**10.** The preparation method of claim 1, wherein the temperature-rising phase comprises the vapor-adding phase at a temperature of 600 °C or less.

**11.** The preparation method of claim 1, wherein the temperature-rising phase has a temperature rising rate of 1 °C/min to 10 °C/min.

**12.** The preparation method of claim 1, wherein the vapor is added in an amount that allows a moisture content rate ($\chi$), according to Equation 1 below, to become 1% to 10%:

[Equation 1]

$$\chi\,(\%) = \frac{\alpha - \beta}{\alpha} \times 100$$

where, in Equation 1 above,
$\alpha$ above is a mass (g) of the lithium composite transition metal oxide and the coating raw material immediately after passing the vapor-adding phase, and $\beta$ above is a mass (g) of the lithium composite transition metal oxide and the coating raw material after complete drying immediately after passing the vapor-adding phase.

**13.** The preparation method of claim 1, wherein the vapor-adding phase is performed under an oxidizing atmosphere.

**14.** The preparation method of claim 1, wherein, in the maintenance phase, the heat treatment is performed while a temperature is maintained at 500 °C to 900 °C.

**15.** The preparation method of claim 1, wherein the maintenance phase is performed for 1 hour to 12 hours.

**16.** The preparation method of claim 1, wherein the maintenance phase does not comprise a vapor-adding phase.

[FIG. 1]

BED-C ——— 5μm

Co ——— 5μm

[FIG. 2]

BED-C Lv.
3572
3209
2847
2484
2121
1758
1398
1033
670
Ave 2033

BED-C ——— 5 μm

Co Conc.%
20.0
17.5
15.0
12.5
10.0
7.5
5.0
2.5
0.0
Ave 3.1

Co ——— 5 μm

[FIG. 3]

BED-C Lv.
2977
2609
2241
1872
1504
1136
768
399
31
Ave 1761

BED-C ——— 5μm

Co Conc.%
20.0
17.5
15.0
12.5
10.0
7.5
5.0
2.5
0.0
Ave 3.2

Co ——— 5μm

[FIG. 4]

BED-C Lv.
3878
3428
2979
2529
2079
1629
1180
730
280
Ave 2105

BED-C ———— 5μm

Co Conc.%
20.0
17.5
15.0
12.5
10.0
7.5
5.0
2.5
0.0
Ave 3.2

Co ———— 5μm

## INTERNATIONAL SEARCH REPORT

| International application No. |
|---|
| **PCT/KR2024/012274** |

### A. CLASSIFICATION OF SUBJECT MATTER

**C01G 53/00**(2006.01)i; **H01M 4/36**(2006.01)i; **H01M 4/525**(2010.01)i; **H01M 4/505**(2010.01)i; **H01M 4/02**(2006.01)i

According to International Patent Classification (IPC) or to both national classification and IPC

### B. FIELDS SEARCHED

Minimum documentation searched (classification system followed by classification symbols)

C01G 53/00(2006.01); H01M 10/052(2010.01); H01M 4/02(2006.01); H01M 4/04(2006.01); H01M 4/131(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 활물질(active material), 코팅층(coating layer), 소성(sintering), 수증기(water vapor), 제조(manufacturing), 이차전지(secondary battery)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0054296 A (LG CHEM, LTD.) 24 April 2023 (2023-04-24)<br>See claims 6-8, and paragraph [0153]. | 1-16 |
| Y | JP 2001-052684 A (DOWA HOLDINGS CO., LTD.) 23 February 2001 (2001-02-23)<br>See claims 3 and 5, and paragraphs [0014] and [0016]. | 1-16 |
| A | KR 10-2023-0060046 A (ECOPRO BM CO., LTD.) 04 May 2023 (2023-05-04)<br>See claims 1, 4, 5 and 7. | 1-16 |
| A | KR 10-2023-0098073 A (LG ENERGY SOLUTION, LTD.) 03 July 2023 (2023-07-03)<br>See claims 1, 3, 4 and 8. | 1-16 |
| A | KR 10-2023-0030694 A (LG CHEM, LTD.) 07 March 2023 (2023-03-07)<br>See claims 3, 4 and 9. | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2024** | **27 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/012274**

| Patent document cited in search report | | | Publication date (day/month/year) | Patent family member(s) | | | Publication date (day/month/year) |
|---|---|---|---|---|---|---|---|
| KR | 10-2023-0054296 | A | 24 April 2023 | CA | 3217171 | A1 | 20 April 2023 |
| | | | | CN | 117178386 | A | 05 December 2023 |
| | | | | EP | 4303959 | A1 | 10 January 2024 |
| | | | | JP | 2024-512946 | A | 21 March 2024 |
| | | | | US | 2024-0186504 | A1 | 06 June 2024 |
| | | | | WO | 2023-063778 | A1 | 20 April 2023 |
| JP | 2001-052684 | A | 23 February 2001 | None | | | |
| KR | 10-2023-0060046 | A | 04 May 2023 | None | | | |
| KR | 10-2023-0098073 | A | 03 July 2023 | CN | 118402090 | A | 26 July 2024 |
| | | | | EP | 4439713 | A1 | 02 October 2024 |
| | | | | WO | 2023-121390 | A1 | 29 June 2023 |
| KR | 10-2023-0030694 | A | 07 March 2023 | CN | 117121226 | A | 24 November 2023 |
| | | | | EP | 4300628 | A1 | 03 January 2024 |
| | | | | JP | 2024-512779 | A | 19 March 2024 |
| | | | | US | 2024-0234713 | A1 | 11 July 2024 |
| | | | | WO | 2023-027413 | A1 | 02 March 2023 |

Form PCT/ISA/210 (patent family annex) (July 2022)

**REFERENCES CITED IN THE DESCRIPTION**

**Patent documents cited in the description**

- KR 1020230107877
- KR 1020200105474